(19) Europäisches Patentamt
European Patent Office
Office européen des brevets

(11)   EP 2 507 586 B1

(12)   FASCICULE DE BREVET EUROPEEN

(45) Date de publication et mention
de la délivrance du brevet:
27.01.2016   Bulletin 2016/04

(51) Int Cl.:
*G01C 21/12* (2006.01)        *G01C 21/20* (2006.01)
*G01C 22/00* (2006.01)

(21) Numéro de dépôt: 10785413.5

(22) Date de dépôt: 30.11.2010

(86) Numéro de dépôt international:
PCT/EP2010/068517

(87) Numéro de publication internationale:
WO 2011/067245 (09.06.2011 Gazette 2011/23)

(54) **SYSTEME ET PROCEDE D'AIDE AU CONDUCTEUR D'UN VEHICULE A ENTRAINEMENT BIOMECANIQUE COMPRENANT AU MOINS UNE ROUE**

SYSTEM UND VERFAHREN ZUR FAHRERUNTERSTÜTZUNG BEI EINEM BIOMECHANISCH BETRIEBENEN FAHRZEUG MIT MINDESTENS EINEM RAD

SYSTEM AND METHOD FOR ASSISTING THE DRIVER OF A BIOMECHANICALLY DRIVEN VEHICLE INCLUDING AT LEAST ONE WHEEL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.12.2009   FR 0958597**

(43) Date de publication de la demande:
**10.10.2012   Bulletin 2012/41**

(73) Titulaires:
• **Movea**
  **38000 Grenoble (FR)**
• **Commissariat à l'Énergie Atomique et aux Énergies Alternatives**
  **75015 Paris (FR)**

(72) Inventeurs:
• **DOUTAZ, Jérôme**
  **F-38000 Grenoble (FR)**
• **RICHE, Stéphanie**
  **F-38000 Grenoble (FR)**
• **JOBERT, Thimothée**
  **F-38000 Grenoble (FR)**

(74) Mandataire: **Brunelli, Gérald**
  **Marks & Clerk France**
  **Immeuble Visium**
  **22, avenue Aristide Briand**
  **94117 Arcueil Cedex (FR)**

(56) Documents cités:
**US-A1- 2009 063 049**

## Description

La présente invention porte sur un système et un procédé d'aide au conducteur d'un véhicule à entrainement biomécanique comprenant au moins une roue.

L'augmentation de la mobilité quotidienne et l'étalement urbain conduisent les individus à circuler à travers des espaces dont ils ne maîtrisent pas nécessairement la géographie. Aussi des dispositifs d'assistance à la conduite par géolocalisation et navigation se sont multipliés depuis quelques années.

A l'exemple des systèmes de guidage par satellites, ces dispositifs permettent aux individus en voiture, à moto, en scooter ou à pieds de se déplacer tout en sachant où ils se trouvent, en sachant quel est le chemin à suivre pour se rendre d'un point à un autre. Les individus ne sont ainsi plus perdus et peuvent même optimiser leur trajet en se faisant guider sur des itinéraires plus rapides, moins couteux, ou comportant des services tels une station de distribution de carburant ou un hôpital.

Les plus connus et répandus des systèmes de guidage sont les systèmes de guidage par satellite utilisant les informations émises par un système de géolocalisation par satellites ou GPS pour "Global Positioning System" en langue anglaise, qui offre actuellement une précision de 15 à 100 mètres pour les systèmes grands publics et nécessite l'utilisation d'une puce GPS qui a l'inconvénient d'avoir une forte consommation d'énergie électrique pour recevoir les signaux provenant des satellites. D'autre part, avant de démarrer, il faut généralement patienter pendant que le GPS trouve la position initiale et calcule l'itinéraire, ce qui peut prendre quelques minutes. En outre, ce type de système n'est pas bien adapté à des véhicules tels les vélos ou patinettes, qui peuvent emprunter de petits chemins non référencés sur les cartographies de tels systèmes.

Il existe également des systèmes de localisation utilisant le système mondial de communication avec les mobiles ou GSM pour "Global System for Mobile communication" en langue anglaise a permis le développement de services de guidage par téléphone mobile. La précision du positionnement par GSM peut aller de 200 mètres à plusieurs kilomètres, selon le type d'endroit où se trouve l'utilisateur, par exemple en milieu urbain où la densité d'antennes est importante, ou en milieu rural où la densité d'antennes est faible. La méthode GSM la plus utilisée est celle des identifiants de cellules ou Cell ID en langue anglaise, représentatifs des antennes. Cette méthode consiste à récupérer les identifiants des antennes GSM auxquelles le terminal est connecté. Une base de données fait ensuite le lien entre les identifiants des cellules et les positions géographiques des antennes, et le terminal mobile est capable d'estimer sa position. Les inconvénients majeurs de cette solution sont le manque de précision et la nécessité de connexion réseau pour récupérer les informations des cellules, qui est consommatrice d'énergie électrique. De manière similaire, la localisation par WIFI est possible mais présente des inconvénients similaires au guidage par GSM ils pâtissent de plus d'une couverture encore incomplète.

Il est également connu d'utiliser la technologie d'identification par radiofréquence ou RFID pour "radio frequency identification" en langue anglaise, peut être utilisée pour la géolocalisation à l'intérieur de bâtiments. Une série de lecteurs d'étiquettes RFID équipés de différents types d'antennes sont positionnés de façon à couvrir l'ensemble de la zone souhaitée. Cette zone est alors découpée en parties dont la surface varie en fonction du nombre de lecteurs déployés et de leur puissance. Lorsqu'une personne équipée d'une étiquette RFID ou "tag RFID" en langue anglaise, active, se trouve dans une partie de la zone, le système est capable de calculer sa position en se basant sur le nombre de lecteurs qui détectent l'étiquette RFID en se référent au schéma de découpage préétabli. En temps réel, cette technique est relativement approximative et sa précision permet surtout de déterminer la pièce ou le couloir dans lequel se trouve la personne géolocalisée. Un inconvénient majeur de cette solution est la nécessité de déployer les étiquettes RFID sur tous les lieux où l'on souhaite localiser les utilisateurs.

D'autres systèmes, tels qu'illustré dans la demande de brevet français FR 05 13269 se basent sur l'utilisation de centrales inertielles qui comprennent des capteurs de types accéléromètres, gyroscopes et magnétomètres. Par fusion des données issues de ces capteurs, ces systèmes estiment l'orientation en trois dimensions de la centrale inertielle. Toutefois, les mesures effectuées par une centrale inertielle présentent une dérive temporelle importante. La demande de brevet US 2009/0063049 A1 décrit un autre système de guidage pour bicyclette combinant GPS, capteurs inertiels, et magnétomètre.

Tous ces systèmes sont fortement consommateurs d'énergie électrique, ce qui n'est pas compatible avec une utilisation pour des véhicules à entrainement biomécanique, ne disposant pas ou peu de réserves d'énergie. En outre, certains de ces systèmes, dépendant d'un système de communication, peuvent également permettre une traçabilité des individus à leur insu.

La présente invention vise à pallier les problèmes précédemment cités.

Selon un aspect de l'invention, il est proposé un système d'aide au conducteur d'un véhicule à entrainement biomécanique selon la revendication 1 annexée.

Un tel système peut être utilisé pour tout véhicule à entrainement biomécanique comprenant au moins une roue, tel un vélo, une patinette, ou une carriole, ne disposant pas de réserve d'énergie importante comme une batterie électrique, car il n'utilise en continu, ou de manière importante de réseau de communication, mais reste très précis.

Selon un mode de réalisation, lesdits premiers moyens de détermination comprennent ledit magnétomètre, et ladite roue du véhicule est pourvue d'une signature magnétique représentative du périmètre de ladite roue du véhicule.

On entend par signature magnétique des caractéristiques des signaux magnétiques représentatifs de la présence, du type ou de l'identité d'un objet.

En variante, lesdits premiers moyens de détermination comprennent ledit magnétomètre et des moyens magnétiques pour créer une signature magnétique de ladite roue du véhicule. Par exemple, lesdits moyens magnétiques comprennent au moins un aimant muni de moyens de fixation adaptés pour être fixés sur ladite roue du véhicule, à proximité de la jante.

Ainsi il est possible de déterminer, de plusieurs manières, la vitesse du véhicule de manière précise à coût réduit.

Lesdits premiers moyens de détermination de la vitesse du véhicule peuvent comprendre des moyens d'apprentissage et/ou de reconnaissance de la signature magnétique de ladite roue du véhicule.

L'apprentissage est une acquisition de connaissance, et la reconnaissance est la capacité à reconnaître ou détecter quelque chose. Ces termes sont appliqués à la signature magnétique de la roue du véhicule.

Ainsi, de manière simple et peu coûteuse, le système peut détecter chaque tour de roue, y associer la distance parcourue à partir du périmètre de la roue, et en déduire la vitesse du véhicule.

Par exemple, lesdits premiers moyens de détermination de la vitesse du véhicule comprennent des moyens de détection de pics sur les signaux des axes de mesures dudit magnétomètre, à partir de détections d'extrema locaux desdits signaux de mesure et d'un seuil d'amplitude.

Il est ainsi possible de compter les tours de roues de manière simple et à coût réduit.

En variante, lesdits deuxièmes moyens de détermination peuvent comprendre ledit magnétomètre et un gyroscope.

Dans un mode de réalisation, lesdits moyens de fourniture d'informations relatives au déplacement du véhicule comprennent un dispositif cartographique, ledit système comprenant, en outre, des troisièmes moyens de détermination d'un point de départ et d'un point d'arrivée du véhicule.

Ainsi, pour guider le conducteur du véhicule, les moyens utilisés sont parfaitement adaptés.

Lesdits troisièmes moyens de détermination peuvent comprendre un écran d'affichage, des cartes géographiques mémorisées, et des moyens de sélection directe par l'utilisateur des points de départ et d'arrivée sur lesdites cartes.

Ainsi, les points de départ et d'arrivée peuvent par exemple être directement entrés par l'utilisateur, sur l'écran d'affichage au moyen de boutons de commandes, ou directement sur l'écran si ce dernier est un écran tactile. Les cartes géographiques mémorisées peuvent être téléchargées par l'intermédiaire d'un réseau de communication.

Lesdits troisièmes moyens de détermination peuvent comprendre un récepteur de données délivrées par des un système de navigation par satellites pour déterminer un point de départ.

Notamment lorsque le système est déjà équipé d'une puce de système de géolocalisation par satellites, tel le GPS, il est alors possible de l'utiliser uniquement pour déterminer précisément le point de départ, ce qui consomme de l'énergie électrique de communication uniquement de manière ponctuelle, et permet de limiter sensiblement la décharge de la batterie et ainsi d'améliorer l'autonomie énergétique du système.

En variante, lesdits troisièmes moyens de détermination comprennent un récepteur de données délivrées par un dispositif fixe à émission à courte distance pour déterminer un point de départ.

En effet, un récepteur de données délivrées par un dispositif fixe à émission à courte distance, tel une borne wifi, une borne RFID, ou une borne de type vélo en libre service. L'émission étant de courte distance le système connaît avec précision la situation à cet instant.

Selon un mode de réalisation, lesdits premiers moyens de détermination comprennent, en outre, des premiers moyens de correction des signaux des axes de mesure fournis par ledit magnétomètre, à partir d'une estimation des perturbations magnétiques dues au véhicule.

La précision du système est ainsi améliorée.

Dans un mode de réalisation, lesdits deuxièmes moyens de détermination comprennent un accéléromètre triaxial.

L'utilisation d'un accéléromètre triaxial est de coût réduit pour une excellente précision.

Selon un mode de réalisation, lesdits deuxièmes moyens de détermination comprennent, en outre, des deuxièmes moyens de correction des signaux des axes de mesure fournis par ledit accéléromètre, à partir d'une estimation de l'accélération propre du véhicule.

Ainsi, la précision du système est améliorée.

Le système peut également comprendre, un dispositif de fixation externe dudit système sur le véhicule, à proximité de ladite roue.

Ainsi le véhicule, par exemple un vélo, peut être muni de ce dispositif de fixation externe, qui reste fixé sur le vélo, et évite ainsi de devoir refaire des calibrations du système à chaque nouvelle utilisation du vélo.

Il est également proposé un téléphone portable comprenant un système intégré selon l'une des revendications précédentes.

En effet le système peut être intégré à un téléphone portable.

Selon un autre aspect de l'invention, il est également proposé un procédé d'aide au conducteur d'un véhicule à entrainement biomécanique selon la revendication 17 annexée.

Il est également proposé un programme d'ordinateur mettant en oeuvre ce procédé.

Ainsi, ce programme peut être téléchargeable sur des terminaux mobiles tels des téléphones portables, et fonctionner directement sur ce matériel.

Selon un autre aspect de l'invention, il est également proposé un kit comprenant un programme d'ordinateur tel que décrit précédemment, au moins un aimant muni de moyens de fixation adaptés pour être fixés sur une roue d'un véhicule, à proximité de la jante, et un dispositif de fixation externe dudit système sur le véhicule, à proximité de ladite roue.

L'invention sera mieux comprise à l'étude de quelques modes de réalisation décrits à titre d'exemples nullement limitatifs et illustrés par les dessins annexés sur lesquels :

- la figure 1 illustre un mode de réalisation d'un système selon un aspect de l'invention ;
- la figure 2 illustre un exemple d'utilisation d'un système selon un aspect de l'invention ;
- la figure 3 illustre les grandeurs physiques utilisées dans le mode de réalisation de la figure 2 ;
- les figures 4a, 4b, 4c et 4d illustrent les variations de champ magnétique en fonction de différents paramètres de réalisation, selon un aspect de l'invention ; et
- la figures 5 illustre la détection de tour de roue de vélo, selon un aspect de l'invention ;

Sur les différentes figures, les éléments ayant des références identiques sont identiques.

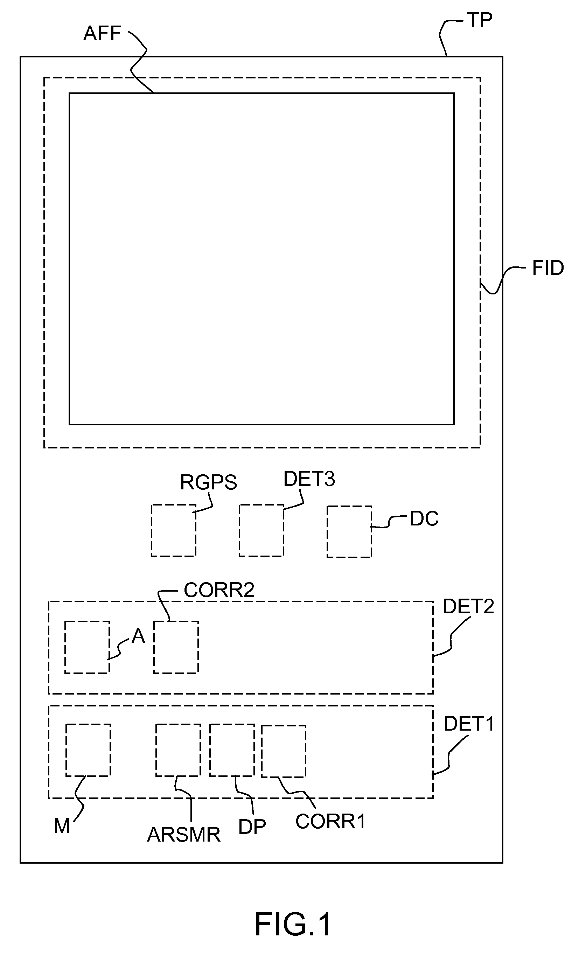

Sur la figure 1 est représenté un système selon un aspect de l'invention, dans le cas où il est intégré à un téléphone portable TP muni d'un écran d'affichage AFF. L'invention s'applique toutefois à tout système comprenant un boitier dédié ou partagé avec d'autres utilisations, toutefois dans la suite de la description, l'exemple sera décrit avec un téléphone portable TP.

En outre, dans la suite de la description, le véhicule à entrainement biomécanique comprenant au moins une roue est un vélo, même si l'invention s'applique à tout type de véhicule à entrainement biomécanique comprenant au moins une roue, tel une patinette, une carriole attelée à un cheval, ou un tricycle.

Le téléphone portable TP comprend un premier module de détermination DET1 de la vitesse du vélo, un deuxième module de détermination DET2 de la pente de la surface de roulage et du cap du vélo. Le cap d'un mobile est la direction vers laquelle il est orienté. C'est l'angle exprimé en degrés (de 0 à 360°), dans le sens des aiguilles d'une montre, entre sa ligne de foi, i.e. son axe longitudinal et le nord.

Un magnétomètre M, à au moins deux axes de mesure, fournit des données pouvant notamment servir à déterminer le cap du vélo. En outre, un module FID fournit des informations relatives au déplacement du vélo.

Le premier module de détermination DET1 de la vitesse du vélo, peut, par exemple comprendre le magnétomètre M lorsque la roue du vélo est pourvue d'une signature magnétique prédéterminée représentative de la roue et donc de son périmètre.

Si la roue n'a pas de signature magnétique, le premier module de détermination DET1 peut alors comprendre un moyen pour créer une signature magnétique de la roue du vélo, par exemple par un ou plusieurs aimants AIM pouvant être fixés par des moyens de fixation adaptés, par exemple par collage ou vissage, à proximité de la jante.

Un module ARSMR d'apprentissage et de reconnaissance de la signature magnétique de la roue permet d'apprendre la signature de la roue, et/ou de reconnaître la signature magnétique de la roue afin de pouvoir compter les tours de roues de celle-ci et en déduire la distance parcourue, voire également la vitesse, le diamètre de la roue pouvant être fourni au système ou présélectionné dans une liste prédéterminée.

Le premier module de détermination DET1 peut également comprendre un module DP de détection de pics sur les signaux des axes mesures du magnétomètre M, à partir de détections d'extrema locaux desdits signaux de mesure et d'un seuil d'amplitude.

L'ajout d'un aimant sur la roue du vélo et le mouvement de cet ensemble crée un signal magnétique oscillant. Ce signal, une fois traité, permet la détection d'un tour de roue. Cependant, ce signal est perturbant pour le calcul de l'orientation.

Pour prendre en compte les perturbations magnétiques liées à l'utilisation de l'aimant ou du dipôle magnétique sur la roue, nous nous basons sur la norme du champ magnétique, notée $\|B\|$. Travailler sur la norme permet de s'affranchir des variations de signal dues aux variations de l'orientation du capteur dans le champ magnétique terrestre.

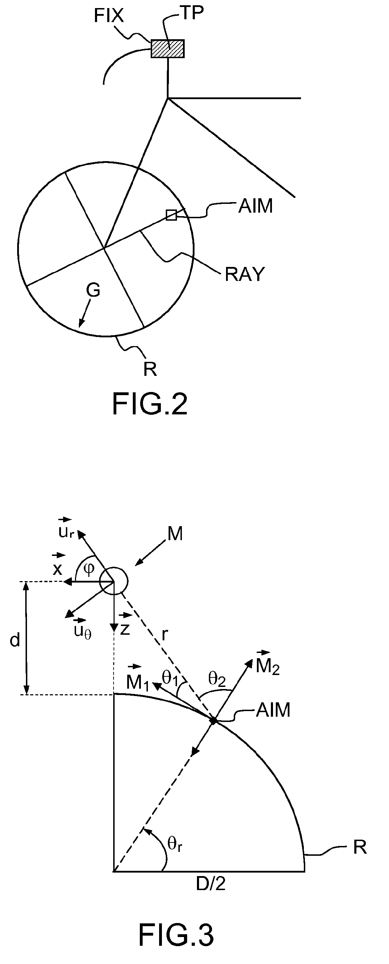

Si on définit une période T du signal, comprise entre deux maxima de champ magnétique (variation de l'angle $\theta_2$, représenté sur la figure 3 entre $[-3\pi/2 ; \pi/2]$), le signal utile pour le calcul de l'orientation (direction et inclinaison) se situe entre $[-5-\pi/4 ; \pi/4]$,

Donc, lorsque deux maxima sont détectés, il suffit d'extraire le signal utile afin de l'utiliser pour la suite des calculs.

Le module FID de fourniture d'informations relatives au déplacement du véhicule peut comprendre, par exemple, un dispositif cartographique DC, et le téléphone portable TP peut, en outre, comprendre un troisième module de détermination DET3 d'un point de départ et d'un point d'arrivée du véhicule, par exemple utilisant une interface tactile telle l'écran AFF du téléphone portable TP. Par exemple, le troisième module de détermination DET3 peut comprendre un récepteur RGPS de données délivrées par un système de navigation par satellites, tel le GPS, pour déterminer un point de départ, de manière précise.

Le premier module de détermination DET1 peut également comprendre un premier module de correction CORR1 des mesures fournies par le magnétomètre M à partir d'une estimation des perturbations magnétiques dues au véhicule.

Le deuxième module de détermination DET2 de la pente de la surface de roulage et du cap du vélo comprend, par exemple un accéléromètre triaxial A, et un deuxième module de correction CORR2 des signaux des axes de mesure fournis par l'accéléromètre A, à partir d'une estimation de l'accélération propre du vélo.

Un dispositif de fixation externe du téléphone portable, sur le vélo, à proximité de la roue, par exemple sur la potence du guidon, peut être prévu, ce qui permet de ne pas avoir à calibrer le système à chaque utilisation du vélo.

En variante, le deuxième module de détermination DET2 peut comprendre le magnétomètre M et un gyroscope ou tout appareil permettant d'effectuer une mesure de la rotation de son boîtier par rapport à un repère absolu. Il est ainsi possible d'obtenir les variations d'orientation du boitier grâce au gyroscope. On obtient ainsi une estimation de l'attitude qui ne dépend pas d'une mesure d'une grandeur physique pouvant être perturbée, telle le champ magnétique par une perturbation magnétique ou le champ de gravité par une accélération propre du moyen de mesure. Par contre, sans correction, l'orientation donnée par le gyroscope présente rapidement une dérive, que peut compenser un magnétomètre.

Un tel système selon l'invention peut apporter de nombreux services à l'utilisateur.

En effet, il peut servir à guider l'utilisateur dans un parcours qu'il souhaite effectuer, en consommant très peu d'énergie électrique, il peut restituer à l'utilisateur de nombreuses informations sur son parcours, telle l'évolution de sa vitesse, la puissance fournie par le cycliste, l'énergie dépensée, la topographie du parcours, et même se servir de ces informations pour le conseiller en temps réel ou après le parcours pour qu'il s'améliore. Il put même servir à la reconnaissance de chute, par exemple pour déclencher l'envoi d'un signal de détresse par SMS en cas d'inactivité prolongée du vélo après une chute.

La figure 2 illustre l'avant d'un vélo sur lequel est fixé un téléphone portable TP, disposé dans un dispositif de fixation FIX externe monté fixement sur la potence du vélo. Un aimant AIM étant monté fixement sur un rayon RAY de la roue R, à proximité de la jante G.

L'aimant AIM de la figure 2, est orienté de manière à avoir un champ magnétique maximum mesuré par un des axes du magnétomètre M. Dans la suite de la description, le magnétomètre M est triaxial. En le fixant à proximité de la jante G de la roue R on obtient une distance minimale Dmin entre le magnétomètre M et l'aimant AIM la plus faible possible, et une distance maximale Dmax entre le magnétomètre M et l'aimant AIM la plus grande possible, de manière à avoir l'amplitude du signal magnétique mesuré par le magnétomètre M la plus grande possible. On facilite ainsi la détection de passage de l'aimant à proximité du magnétomètre M lorsque la roue R tourne.

Sur la figure 3 sont représentées les grandeurs physiques utilisées dans le cas de réalisation de la figure 2, lorsque l'aimant AIM est en contact avec la jante G.

En définissant les grandeurs suivantes :

r représente la distance courante séparant l'aimant du magnétomètre M, en m,

d représente la distance minimale séparant l'aimant du magnétomètre M, en m,

D représente le diamètre de la roue R, en m,

$\vec{x}$ représente l'axe x de mesure du magnétomètre M,

$\vec{z}$ représente l'axe z de mesure du magnétomètre M,

$\vec{u_r}$ représente la direction entre l'aimant AIM et le magnétomètre M,

$\vec{u_\theta}$ représente la direction normale à $\vec{u_r}$ dans le sens trigonométrique,

$\theta_r$ représente l'angle de rotation de la roue R, en rad,

$\varphi$ représente l'angle entre $\vec{u_r}$ et $\vec{x}$, en rad,

$\vec{M_1}$ représente le moment magnétique de l'aimant AIM selon une première orientation nommée "orientation 1", en A.m$^2$,

$\vec{M_2}$ représente le moment magnétique de l'aimant AIM selon une deuxième orientation nommée "orientation 2", en A.m$^2$,

$\theta_1$ représente l'angle entre $\vec{M_1}$ et $\vec{u_r}$, en radian

$\theta_2$ représente l'angle entre $\vec{M_2}$ et $\vec{u_r}$, en radian

On a les relations suivantes :

$$r = \sqrt{\left(\frac{D}{2}+d\right)^2 + \left(\frac{D}{2}\right)^2 + 2\left(\frac{D}{2}+d\right)\left(\frac{D}{2}\right)\sin(\theta_r)}$$

$$\varphi = a\cos\left(\frac{D}{2r}\cos(\theta_r)\right)$$

$$\theta_1 = \varphi + \theta_r - \frac{\pi}{2}$$

$$\theta_2 = \pi - \varphi - \theta_r$$

$$\vec{B} = \frac{\mu_0 m}{4\pi r^3}(2\cos(\theta)\vec{u}_r + \sin(\theta)\vec{u}_\theta)$$

$$\vec{u}_r = \cos(\varphi)\vec{x} - \sin(\varphi)\vec{z}$$

$$\vec{u}_\theta = \sin(\varphi)\vec{x} + \cos(\varphi)\vec{z}$$

$$B_x = \frac{100m}{r^3}(2\cos(\theta)\cos(\varphi) - \sin(\theta)\sin(\varphi))$$

$$B_z = \frac{100m}{r^3}(-2\cos(\theta)\sin(\varphi) + \sin(\theta)\cos(\varphi))$$

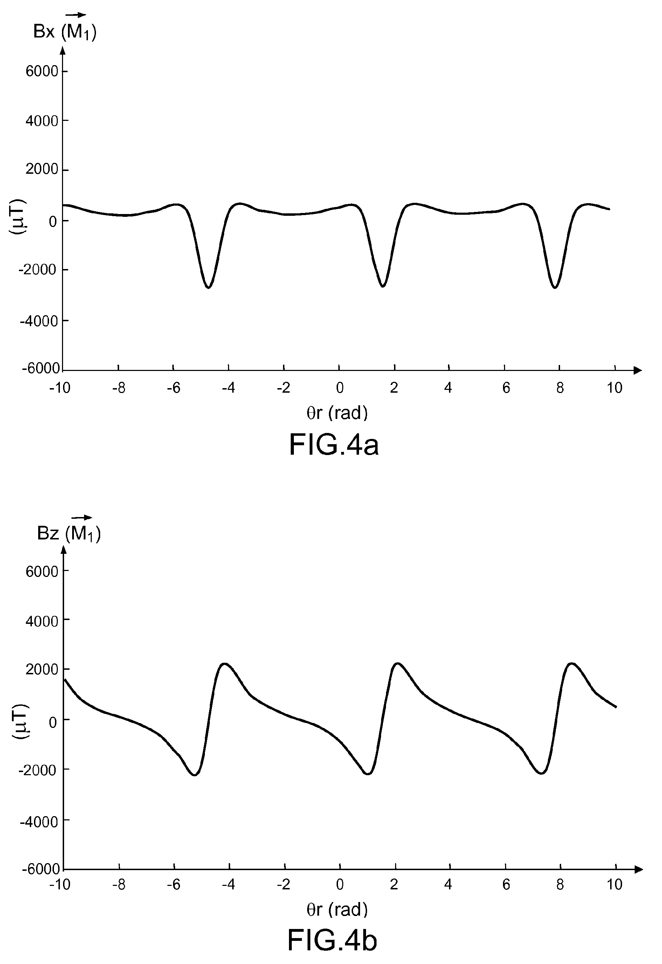

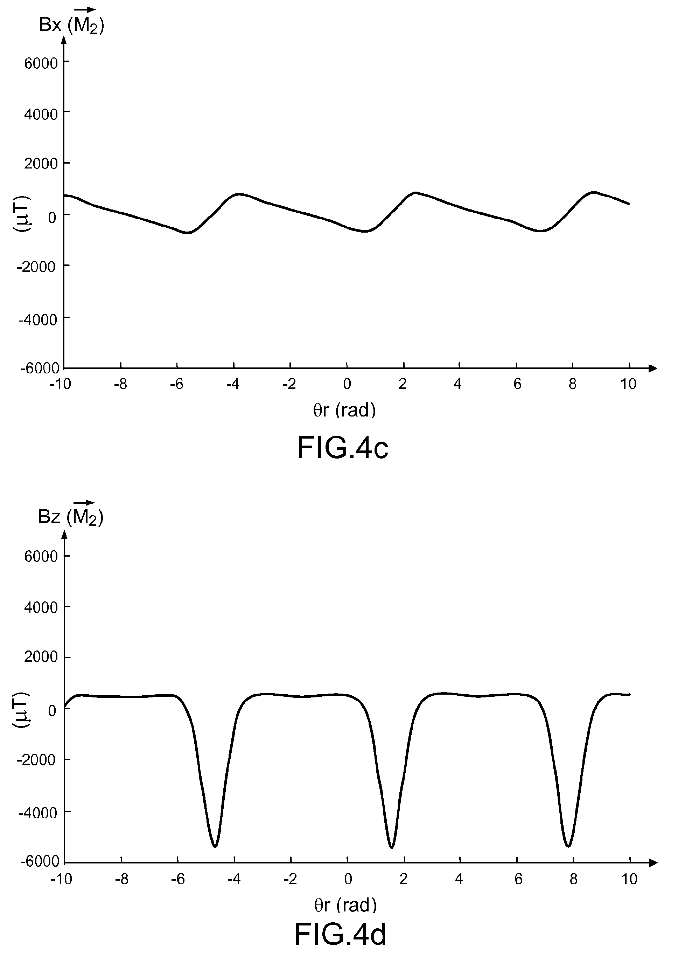

Les figures 4a, 4b, 4c, 4d représentent respectivement le champ magnétique mesuré par l'axe x et z du magnétomètre M pour l'orientation 1 de l'aimant AIM, et le champ magnétique mesuré par l'axe x et z du magnétomètre M pour l'orientation 2 de l'aimant AIM, lorsque D=0.66 m, d=0.5 m, $m$ =3.402 A.m$^2$, $m$ représentant la norme du moment magnétique de l'aimant AIM.

Les variations des signaux de mesure du magnétomètre M sont de l'ordre de 10 à 15 % de l'amplitude du champ magnétique terrestre. Ces variations sont maximisées pour la seconde orientation de l'aimant, dépendant de la forme de l'aimant AIM et correspondant au deuxième moment magnétique $\overrightarrow{M_2}$ sur la figure 3, connu en fonction de la forme de l'aimant AIM, en observant le champ sur l'axe z du magnétomètre M, généralement orienté vers le bas par construction.

L'optimisation des variations des signaux permet de les rendre plus facilement détectables par rapport aux autres variations que peut subir le champ magnétique mesuré par le magnétomètre M.

La forme du signal magnétique de l'aimant est connue à priori en fonction de caractéristiques de l'aimant, telle sa forme, aussi on peut borner la détection, de manière à éliminer les petites variations de signaux non significatives, et aussi les variations trop importantes dues à des objets magnétiques autres que l'aimant AIM à proximité du magnétomètre M.

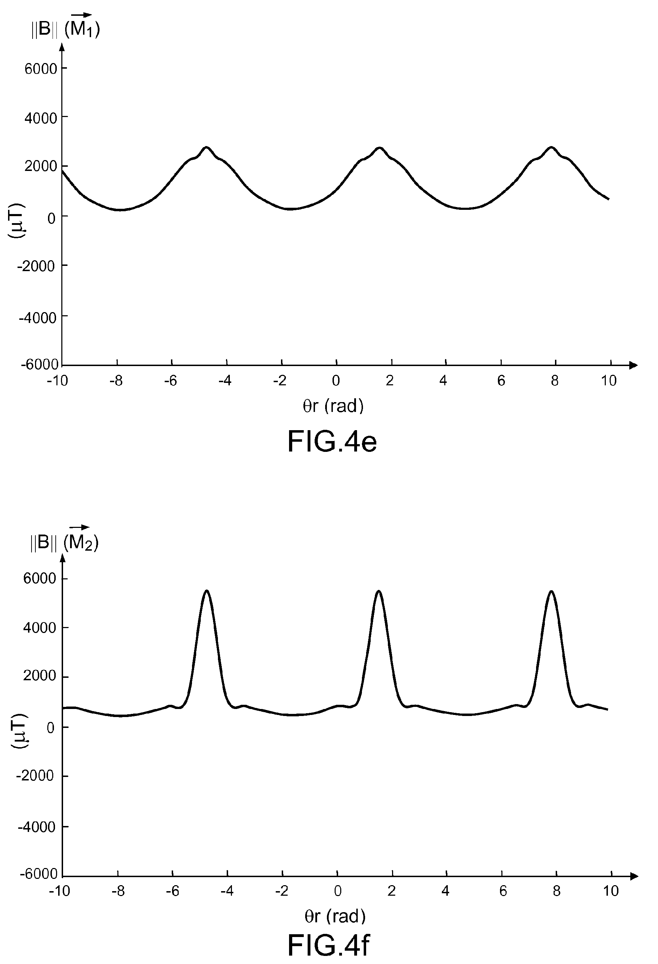

En variante, une norme $\|B\|$ du champ magnétique B peut être utilisée, pour les moments $\overrightarrow{M_1}$ et $\overrightarrow{M_2}$ de la figure 3. L'utilisation d'une norme permet de s'affranchir des variations du champ magnétique liées au changement d'orientation du magnétomètre M dans le champ magnétique terrestre. Un exemple obtenu à partir des mesures du magnétomètre M est illustré sur les figures 4e et 4f.

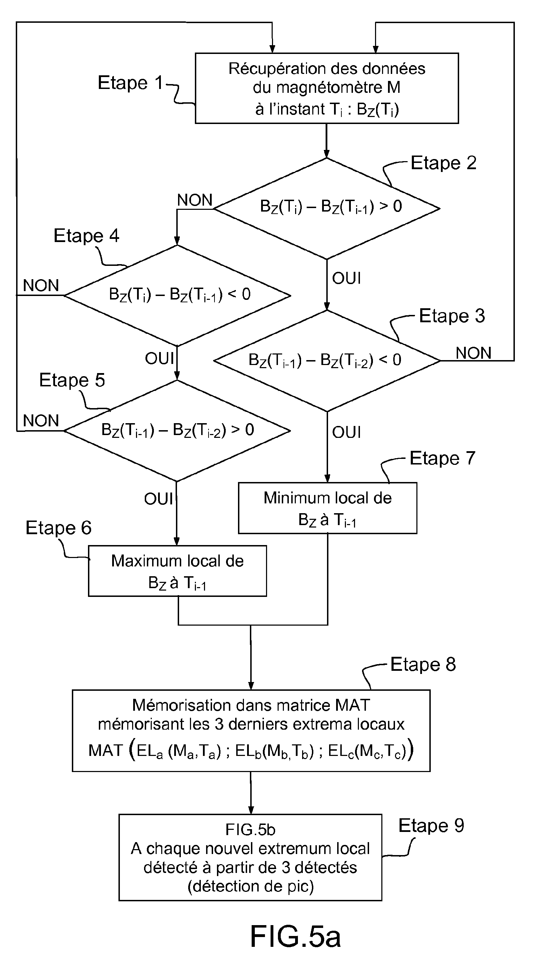

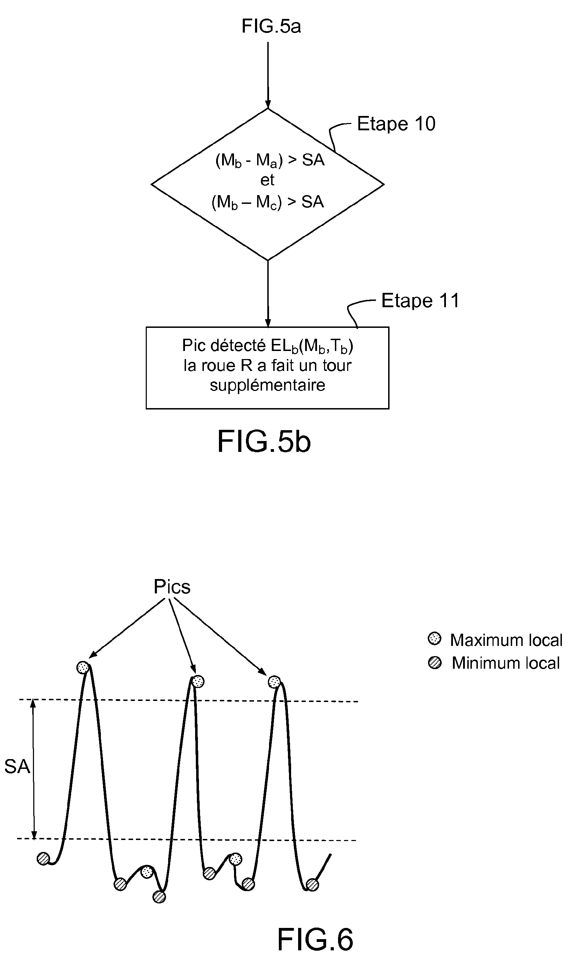

Le module DP de détection de pics met, par exemple, en oeuvre l'algorithme décrit par les figures 5a et 5b, permettant de détecter les pics correspondant à un passage de l'aimant AIM près du magnétomètre M, i.e. un tour de roue depuis le dernier passage, à partir des extrema locaux du signal, illustrés sur la figure 6.

A un instant de mesure $T_i$, les mesures transmises par le magnétomètre M sont récupérées, et la valeur du champ magnétique Bz mesuré selon l'axe z, est pris en compte, dans une étape 1. Bien entendu, en variante, selon l'orientation de l'aimant AIM, il est possible de prendre Bx à la place de Bz, voire la norme $\|B\|$ du champ magnétique B si l'on désire s'affranchir des variations du signal dues aux variations d'orientation. Puis, dans une étape 2 est testée si la variation $Bz(T_i)\text{-}Bz(T_{i-1})$ du champ magnétique Bz entre les deux dernières mesures transmises par le magnétomètre M aux instants $T_{i-1}$ et $T_i$ est strictement positive, et si c'est le cas, i.e. si le test est positif, dans une étape 3 est testée si la précédente variation $Bz(T_{i-1})\text{-}Bz(T_{i-2})$ du champ magnétique Bz entre les deux précédentes dernières mesures transmises par le magnétomètre M aux instants $T_{i-21}$ et $T_{i-1}$ est strictement négative. Si le résultat du test de l'étape 2 est négatif, i.e. si la variation $Bz(T_i)\text{-}Bz(T_{i-1})$ est strictement positive ou nulle, dans une étape 4 est testée si la variation $Bz(T_i)\text{-}Bz(T_{i-1})$ est strictement négative, et si c'est le cas, i.e. si le test est positif, dans une étape 5 est testée si la précédente variation $Bz(T_{i-1})\text{-}Bz(T_{i-2})$ est strictement positive. En cas de réponse négative aux tests des étapes 3, 4 et 6, on boucle sur l'étape 1 à l'instant de mesure suivant.

En cas de réponse positive au test de l'étape 5, un maximum local de Bz est détecté à une étape 6, et en cas de réponse positive au test de l'étape 3, un minimum local de Bz est détecté à une étape 7.

Lorsqu'un maximum local ou un minimum local est détecté aux étapes 6 ou 7, cet extrema est mémorisé, lors d'une étape 8, dans une matrice MAT mémorisant les trois derniers extrema locaux à partir du moment où les trois premiers extrema ont été détectés. La matrice MAT peut s'écrire sous la forme suivante :

$$\text{MAT } (EL_a\,(M_a,\,T_a);\ EL_b\,(M_b,\,T_b);\ EL_c\,(M_c,\,T_c))$$

Aussi, lorsqu' une nouvelle détection d'extrema est effectuée dans l'étape 6 ou 7, et que la matrice MAT est mise à jour pour contenir les coordonnées des trois derniers extrema locaux, dans l'ordre chronologique, lors d'une étape 9, une détection de pic est déclenchée, comme illustré sur la figure 5b, afin de déterminer si l'extrema local $EL_b$, est un pic correspondant au passage de l'aimant AIM à proximité du magnétomètre M, ce qui correspond à un tour de la roue R depuis le dernier passage de 'aimant AIM à proximité du magnétomètre M.

En ce cas, lors d'une étape 10, est effectué un test de comparaison par rapport à un seuil d'amplitude SA positif, pour tester si l'écart $M_b\text{-}M_a$ entre les valeurs du champ magnétique Bz du premier extrema local $EL_a$ et du deuxième extrema local $EL_b$ mémorisés dans la matrice MAT est supérieure au seuil d'amplitude SA, et si l'écart $M_b\text{-}M_c$ entre les valeurs du champ magnétique Bz du troisième extrema local $EL_c$ et du deuxième extrema local $EL_b$ mémorisés dans la matrice MAT est supérieure au seuil d'amplitude SA.

Si le résultat du test de l'étape 10 est positif, un pic est détecté à l'extrema $EL_b\,(M_b,\,T_c)$.

Le deuxième module de détermination DET2 de la pente de la surface de roulage et du cap du vélo peut, par exemple, être réalisé comme suit.

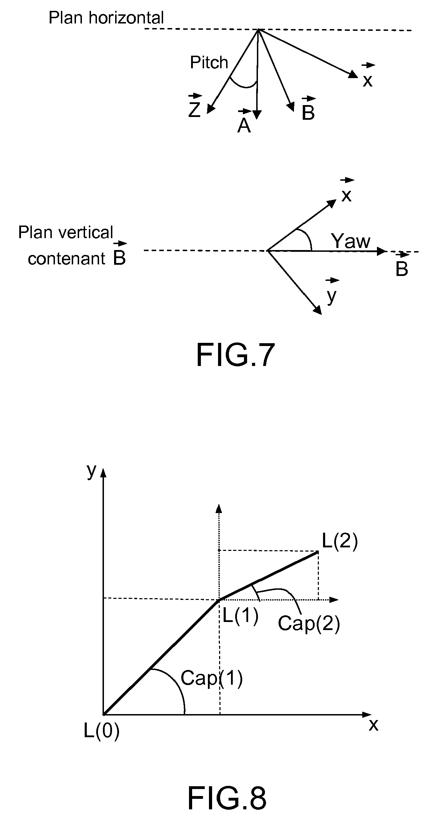

Les angles d'Euler (Yaw, Pitch, Roll) sont utilisés, l'angle Yaw en langue anglaise est l'angle de lacet, l'angle Pitch en langue anglaise est l'angle de tangage, et l'angle Roll en langue anglaise est l'angle de roulis. Les angles Pitch de roulis et de lacet Yaw sont représentés sur la figure 7, sur laquelle sont représentés le champ magnétique $\vec{B}$ et le champ de gravitation $\vec{A}$.

L'angle de lacet Yaw indique la direction ou cap du vélo par rapport au nord magnétique, et l'angle de roulis Pitch donne l'inclinaison du vélo par rapport au plan horizontal, ou pente de la surface de roulage.

Les angles d'Euler (Yaw, Pitch, Roll) sont calculés à partir des mesures du champ magnétique $\vec{B}$ et du champ de gravitation $\vec{A}$ à l'instant T, de la connaissance d'une orientation initiale de ces champs $\vec{b}_0$ et $\vec{a}_0$, et d'éventuelles corrections des perturbations de champ magnétique et d'accélération.

En effet, le vélo peut contenir des matériaux ferromagnétiques sources d'un champ magnétique qui vient perturber la mesure du magnétomètre M, entraînant une erreur lors du calcul des angles d'Euler.

Dans la suite de la description, la convention prise est une convention d'angles directs, correspondant aux rotations des vecteurs $\vec{A}$ et $\vec{B}$ dans le repère $(\vec{x},\,\vec{y},\,\vec{z})$ lié au magnétomètre M.

Ci-suit un exemple de réalisation du premier module de correction CORR1 des signaux des axes de mesure fournis par ledit magnétomètre M à partir d'une estimation des perturbations magnétiques dues au vélo.

Afin de calculer ces perturbations, il est nécessaire d'effectuer une calibration préalable avant tout calcul d'angles.

Il est possible d'effectuer une calibration à partir de quatre mesures, le téléphone portable TP intégrant un magnétomètre M étant fixé sur le vélo. Le vélo est alors placé sur une surface plane, et fixe.

Le magnétomètre M est préalablement calibré en absence de toute perturbation magnétique par exemple par une méthode de type Merayo. La méthode consiste à faire tourner lentement le magnétomètre M autour de chaque axe, face au nord.

Les quatre mesures sont effectuées de la manière suivante :

- une mesure de l'accélération $\vec{A}_n(A_{n1},\,A_{n2},\,A_{n3})$ et du champ magnétique $\vec{M}n(M_{n1},\,M_{n2},\,M_{n3})$ avec l'axe x du magnétomètre M orienté dans la direction du nord magnétique ;
- une mesure du champ magnétique $\vec{M}s(M_{s1}, M_{s2}, M_{s3})$ avec l'axe x du magnétomètre M orienté dans la direction du sud magnétique ;
- une mesure du champ magnétique $\vec{M}o(M_{o1}, M_{o2}, M_{o3})$ avec l'axe x du magnétomètre M orienté dans la direction de l'ouest magnétique ; et
- une mesure du champ magnétique $\vec{M}e(M_{e1}, M_{e2}, M_{e3})$ avec l'axe x du magnétomètre M orienté dans la direction de l'est magnétique.

Or:

$$\vec{a_0} = \begin{bmatrix} \sin(Pitch) \\ 0 \\ \cos(Pitch) \end{bmatrix}$$

$$\vec{b_O} = \begin{bmatrix} \cos(alpha) \\ 0 \\ \sin(alpha) \end{bmatrix}$$

et alpha est l'angle entre le vecteur de champ magnétique terrestre et le plan horizontal, et vaut 60°. En outre, on a la relation suivante :

$$\vec{B_{mes}} = R.\vec{b_O} + \vec{B_r} + M_i.R.\vec{b_O}$$

dans laquelle :

$$R = \begin{bmatrix} \cos(Pitch) \times \cos(Yaw) & -\cos(Pitch) \times \sin(Yaw) & \sin(Pitch) \\ \sin(Yaw) & \cos(Yaw) & 0 \\ -\sin(Pitch) \times \cos(Yaw) & \sin(Pitch) \times \sin(Yaw) & \cos(Pitch) \end{bmatrix}$$

$\vec{B_{mes}}$ représente le champ magnétique mesuré,

R représente la matrice de rotation permettant de passer de l'orientation initiale décrite par les vecteurs $\vec{a_o}$ et $\vec{b_o}$ à l'orientation courante des capteurs décrite par les angles de rotation Yaw, Pitch et Roll,

$\vec{B_r}$ représente le champ magnétique rémanent lié au vélo, qui vient se superposer au champ magnétique terrestre, et

G représente un gain, représentatif de l'influence de l'orientation des matériaux ferromagnétiques dans le champ magnétique terrestre, et

$\vec{a_o}$ et $\vec{b_o}$ sont les champs respectivement mesurés par l'accéléromètre A et le magnétomètre M lorsque l'axe x du magnétomètre M est horizontal et dirigé dans la direction du nord magnétique, et que l'axe z est vertical suivant le champ de gravitation.

Il faut alors déterminer :

$$G = \begin{bmatrix} G_{11} & G_{12} & G_{13} \\ G_{21} & G_{22} & G_{23} \\ G_{31} & G_{32} & G_{33} \end{bmatrix}$$

et

$$\overrightarrow{B_r} = \begin{bmatrix} B_{r1} \\ B_{r2} \\ B_{r3} \end{bmatrix}$$

de composantes dans le repère lié au vélo et au magnétomètre M fixe par rapport au vélo.

En résolvant le système, et en posant *Pitch* = $P = a \sin(A_{n1})$, on obtient :

$$G_{12} = \frac{Mo_1 - Me_1}{2\cos(alpha)}$$

$$G_{22} = \frac{Mo_2 - Me_2}{2\cos(alpha)} - 1$$

$$G_{32} = \frac{Mo_3 - Me_3}{2\cos(alpha)}$$

$$G_{13} = \frac{Mn_1 + Ms_1 - Mo_1 - Me_1}{2\sin(alpha - P)}$$

$$G_{11} = \frac{Mn_1 - Ms_1 - 2\cos(Pitch) \times \cos(alpha) + 2\sin(P) \times \cos(alpha) * G_{13}}{2\cos(P) \times \cos(alpha)}$$

$$G_{23} = \frac{Mn_2 + Ms_2 - Mo_2 - Me_2}{2\sin(alpha - P)}$$

$$G_{21} = \frac{Mn_2 - Ms_2 + 2\sin(P) \times \cos(alpha) \times G_{23}}{2\cos(P) \times \cos(alpha)}$$

$$G_{33} = \frac{Mn_3 + Ms_3 - Mo_3 - Me_3}{2\sin(alpha - P)}$$

$$G_{31} = \frac{Mn_3 - Ms_3 + 2\sin(P) \times \cos(alpha) + 2\sin(P) \times \cos(alpha) \times G_{33}}{2\cos(P) \times \cos(alpha)}$$

*et*

$$B_{r1} = Mo_1 - \sin(alpha) \times \sin(P) - G_{11} \times \sin(alpha) \times \sin(P)$$
$$- G_{12} \times \cos(alpha) + G_{13} \times \sin(alpha) \times \cos(P)$$

$$B_{r2} = Mo_2 - \cos(alpha) - G_{21} \times \sin(alpha) \times \sin(P)$$
$$- G_{22} \times \cos(alpha) + G_{23} \times \sin(alpha) \times \cos(P)$$

$$B_{r3} = Mo_3 - \sin(alpha) \times \cos(P) - G_{31} \times \sin(alpha) \times \sin(P)$$
$$- G_{32} \times \cos(alpha) + G_{33} \times \sin(alpha) \times \cos(P)$$

Cette calibration supplémentaire n'est à effectuer qu'une seule fois pour un vélo et un emplacement du magnétomètre sur le vélo. Les données calculées sont enregistrées dans un fichier de configuration, réutilisables ultérieurement.

La correction du champ magnétique mesuré $\overrightarrow{B_{mes}}$ s'effectue par la suite de la manière suivante :

$$\vec{B} = (I + G)^{-1} \cdot (\overrightarrow{B_{mes}} - \vec{B_r}),$$

$\vec{B}$ étant le champ magnétique corrigé, $\overrightarrow{B_{mes}}$ le champ magnétique réellement mesuré, et I la matrice identité de dimension 3.

En variante, cette calibration peut être faite à partir d'un déplacement circulaire de l'utilisateur du vélo. L'utilisateur fait parcourir au vélo un cercle complet, puis un mouvement de balancier latéral de gauche à droite, dans une ou plusieurs directions différentes, de manière à utiliser une pluralité d'orientations différentes.

Le deuxième module de correction CORR2 des signaux des axes de mesure fournis par l'accéléromètre A, à partir d'une estimation de l'accélération propre du vélo, peut permettre d'améliorer la précision en compensant les perturbations liées à l'accélération propre du vélo.

En effet, le vélo étant en mouvement, l'accélération mesurée par l'accéléromètre A est la somme de la gravité et de l'accélération propre du vélo. Déterminer l'accélération propre du vélo permet de connaître la position du vecteur gravité dans le repère lié à l'accéléromètre A (les repères du magnétomètre M et de l'accéléromètre A sont soit confondus, soit liés par une matrice de rotation connue par calibration), car c'est ce vecteur gravité qui est utilisé lors du calcul des angles d'Euler. Par exemple, on détermine l'accélération propre par estimation, à partir d'un état antérieur statique, dans lequel l'accélération mesurée correspond uniquement à la gravité.

Les angles d'Euler peuvent, par exemple, être alors calculés par des calculs connus, par exemple mentionnés dans le livre "Quaternions and Rotations Sequences", Ed Princeton, de J. B. Kuipers, dans lequel le quaternion, puis la matrice de rotation, et enfin les angles d'Euler associés aux mouvements de rotation de l'accéléromètre A et du magnétomètre M et donc du vélo, dans l'espace.

Une moyenne des valeurs de l'angle de lacet Yaw et de l'angle de tangage Pitch sur le débattement de roue correspondant au minimum de perturbation magnétique de la part de l'aimant, soit environ trois quarts d'un tour de roue.

Lorsque le système est muni d'un écran d'affichage et d'un dispositif cartographique, notamment pour guider l'utilisateur, l'affichage du changement de position du vélo sur la carte peut être géré comme suit, en référence à la figure 8.

A chaque tour de roue R correspond un point L(n) représentant la localisation du vélo sur la carte, n étant un indice représentant le nombre de tours de roue R effectués depuis le point de départ. Il est alors possible de reporter l'emplacement du cycliste sur une carte interactive du dispositif cartographique. On connaît à priori le point de départ du cycliste, O(xi, yi), et on passe du point L(n) de coordonnées (x(n), y(n)) au point L(n+1) de coordonnées (x(n+1), y(n+1)) par les relations suivantes (n≥0) :

$$\begin{cases} x(n+1) = x(n) + \dfrac{PerimRoue \times \cos(cap(n)) \times \cos(pente(n))}{EchelleCarte} \\ y(n+1) = y(n) + \dfrac{PerimRoue \times \sin(cap(n)) \times \cos(pente(n))}{EchelleCarte} \end{cases}$$

*avec* :

$$\begin{cases} x(0) = x_i \\ y(0) = y_i \end{cases}$$

dans lesquelles :

PerimRoue représente le périmètre le la roue R , en m,
cap(n) représente le cap du vélo au $n^{i\grave{e}me}$ tour de la roue R, en degrés, pente(n) représente la pente de la surface de roulage au $n^{i\grave{e}me}$ tour de la roue R, en m, et
EchelleCarte représente l'échelle de la carte, en m/pixel.

Pour le placement sur la carte affichée, les coordonnées sont utilisées en respectant les relations suivantes :

$$\begin{cases} x_c(n) = \dfrac{x(n)\cos(AngleCarte) - y(n)\sin(AngleCarte)}{EchelleCarte} \\ y_c(n) = \dfrac{x(n)\sin(AngleCarte) + y(n)\cos(AngleCarte)}{EchelleCarte} \end{cases}$$

dans lesquelles AngleCarte représente l'orientation de la carte par rapport au nord magnétique, en degrés.

Le paramètre EchelleCarte permet de convertir des mètres en pixel, en fonction de l'échelle de la carte, de manière à positionner correctement l'emplacement du cycliste sur la carte, l'affichage se faisant en effet au niveau du pixel de l'écran d'affichage.

L'orientation de la carte par rapport au nord magnétique peut également être prise en compte. A cet effet, une rotation du vecteur position L(x(n), y(n)) de l'angle AngleCarte est effectuée au moyen d'une rotation matricielle:

$$\begin{bmatrix} x_r(n) \\ y_r(n) \end{bmatrix} = \begin{bmatrix} \cos(AngleCarte) & -\sin(AngleCarte) \\ \sin(AngleCarte) & \cos(AngleCarte) \end{bmatrix} \begin{bmatrix} x(n) \\ y(n) \end{bmatrix}$$

La connaissance de la pente de la surface de roulage du vélo permet la représentation sur une carte plane, où la notion d'altitude est absente, et permet de rendre compte des dénivelées parcourus par le cycliste. Ainsi, au cours du temps l'itinéraire parcouru, la position du cycliste par rapport à son point de départ est toujours connue.

La présente invention permet à un utilisateur de véhicule à entrainement biomécanique comprenant au moins une roue, par exemple un vélo, d'être aidé au cours de sa conduite, en consommant très peu d'énergie, ce qui permet d'augmenter sensiblement l'autonomie du système.

Les services rendus au conducteur, peuvent être, seuls, ou en combinaison, du guidage d'un point de départ à un point d'arrivée, de la fourniture d'informations concernant le trajet effectué ou la conduite, en temps réel ou à postériori, du conseil de conduite, par exemple une analyse des balancements d'un cycliste, voire de la reconnaissance de chute.

**Revendications**

1. Système d'aide au conducteur d'un véhicule comprenant un entraînement biomécanique comprenant au moins une roue (R), comprenant:

   - un magnétomètre (M) à au moins deux axes de mesure;
   - des premiers moyens de détermination (DET1) de la vitesse du véhicule à partir de mesures fournies par ledit magnétomètre (M) ;
   - des deuxièmes moyens de détermination (DET2) du cap du véhicule et de la pente de la surface de roulage;
   - des moyens de fourniture d'informations (FID) relatives à un déplacement du véhicule, à partir de la vitesse du véhicule, de la pente de la surface de roulage, et du cap du véhicule;
   **caractérisé en ce que** lesdits deuxièmes moyens de détermination (DET2) déterminent le cap du véhicule à partir de mesures fournies par ledit magnétomètre (M).

2. Système selon la revendication 1, dans lequel lesdits deuxièmes moyens de détermination (DET2) comprennent, en outre un accéléromètre triaxial (A) et/ou un gyroscope, et sont adaptés pour déterminer le cap du véhicule et la pente de la surface de roulage en outre à partir respectivement de fournies par l'accéléromètre triaxial et/ou le gyroscope.

3. Système selon la revendication 1 ou 2, dans lequel ladite roue (R) du véhicule est pourvue d'une signature magnétique représentative du périmètre de ladite roue (R) du véhicule.

4. Système selon la revendication 1 ou 2, dans lequel lesdits premiers moyens de détermination (DET1) comprennent en outre des moyens magnétiques pour créer une signature magnétique de ladite roue du véhicule.

**5.** Système selon la revendication 4, dans lequel lesdits moyens magnétiques comprennent au moins un aimant (AIM) muni de moyens de fixation adaptés pour être fixés sur ladite roue (R) du véhicule, à proximité de la jante.

**6.** Système selon l'une des revendications 3 à 5 dans lequel lesdits premiers moyens de détermination (DET1) de la vitesse du véhicule comprennent des moyens (ARSMR) d'apprentissage et/ou de reconnaissance de la signature magnétique de ladite roue (R) du véhicule.

**7.** Système selon la revendication 5 ou 6, dans lequel, lesdits premiers moyens de détermination (DET1) de la vitesse du véhicule comprennent des moyens de détection de pics (DP) sur les signaux des axes mesures dudit magnétomètre (M), à partir de détections d'extrema locaux desdits signaux de mesure et d'un d'amplitude (SA).

**8.** Système selon l'une des revendications précédentes, dans lequel lesdits moyens de fourniture d'informations (FID) relatives au déplacement du véhicule comprennent un dispositif cartographique, ledit système comprenant, en outre, des troisièmes moyens de détermination (DET3) d'un point de départ et d'un point d'arrivée du véhicule.

**9.** Système selon la revendication 8, dans lequel lesdits troisièmes moyens de détermination (DET3) comprennent un écran (AFF), des cartes géographiques mémorisées, et des moyens de sélection directe par l'utilisateur des points de départ et d'arrivée sur lesdites cartes.

**10.** Système selon la revendication 8, dans lequel lesdits troisièmes moyens de détermination (DET3) comprennent un récepteur de données délivrées par un système de navigation par satellites pour déterminer un point de départ.

**11.** Système selon la revendication 8, dans lequel lesdits troisièmes moyens de détermination (DET3) comprennent un récepteur de données délivrées par un dispositif fixe à émission à courte distance pour déterminer un point de départ.

**12.** Système selon l'une des revendications précédentes, dans lequel lesdits premiers moyens de détermination (DET1) comprennent, en outre, des premiers moyens de correction (CORR1) des signaux des axes de mesure fournis par ledit magnétomètre (M) à partir d'une estimation des perturbations magnétiques dues au véhicule.

**13.** Système selon l'une des revendications précédentes, dans lequel lesdits deuxièmes moyens de détermination (DET2) comprennent un accéléromètre triaxial (A).

**14.** Système selon l'une des revendications précédentes en dépendance avec la revendication 2, dans lequel lesdits deuxièmes moyens de détermination (DET2) comprennent ledit accéléromètre (A), comprennent, en outre, des deuxièmes moyens de correction (CORR2) des signaux des axes de mesure fournis par ledit accéléromètre (A), à partir d'une estimation de l'accélération propre du véhicule.

**15.** Système selon l'une des revendications précédentes, comprenant, en outre, un dispositif de fixation externe (FIX) dudit système sur le véhicule, à proximité de ladite roue (R).

**16.** Téléphone portable (TP) comprenant un système intégré selon l'une des revendications précédentes.

**17.** Procédé d'aide au conducteur d'un véhicule à entraînement biomécanique comprenant au moins une roue, comprenant les étapes consistant à :

  - recevoir les mesures d'un magnétomètre (M) à au moins deux axes de mesure ;
  - déterminer la vitesse du véhicule à partir de mesures fournies par ledit magnétomètre (M);
  - déterminer le cap du véhicule ;
  - déterminer la pente de la surface de roulage ;
  - fournir des informations relatives à un déplacement du véhicule, à partir de la vitesse du véhicule, de la pente de la surface de roulage, et du cap du véhicule;

  **caractérisé en ce que** la détermination du cap du véhicule se fait à partir de mesures fournies par ledit magnétomètre (M).

**18.** Programme d'ordinateur **caractérisé en ce qu'**il met en oeuvre le procédé selon la revendication 17.

**19.** Kit comprenant un programme d'ordinateur selon la revendication 18, au moins un aimant (AIM) muni de moyens de fixation adaptés pour être fixés sur une roue (R) d'un véhicule, à proximité de la jante, et un dispositif de fixation externe (FIX) dudit système sur le véhicule, à proximité de ladite roue (R).

**Patentansprüche**

1. System zur Fahrerunterstützung eines Fahrzeugs, das einen biomechanischen Antrieb umfasst, umfassend mindestens ein Rad (R), umfassend:

   - ein Magnetometer (M) mit mindestens zwei Messachsen,
   - erste Bestimmungsmittel (DET1) der Geschwindigkeit des Fahrzeugs auf der Basis von von dem Magnetometer (M) bereitgestellten Messwerten,
   - zweite Bestimmungsmittel (DET2) des Kurses des Fahrzeugs und der Neigung der Rollfläche,
   - Bereitstellungsmittel (FID) von Informationen in Bezug auf eine Verlagerung des Fahrzeugs auf der Basis der Geschwindigkeit des Fahrzeugs, der Neigung der Rollfläche und des Kurses des Fahrzeugs,

   **dadurch gekennzeichnet, dass** die zweite Bestimmungsmittel (DET2) den Kurs des Fahrzeugs auf der Basis von von dem Magnetometer (M) bereitgestellten Messwerten bestimmen.

2. System nach Anspruch 1, wobei die zweiten Bestimmungsmittel (DET2) ferner einen triaxialen Beschleunigungsmesser (A) und/oder ein Gyroskop umfassen und ausgebildet sind, um den Kurs des Fahrzeugs und die Neigung der Rollfläche ferner auf der Basis jeweils von von dem triaxialen Beschleunigungsmesser und/oder dem Gyroskop bereitgestellten Messwerten zu bestimmen.

3. System nach Anspruch 1 oder 2, wobei das Rad (R) des Fahrzeugs mit einer magnetischen Signatur ausgestattet ist, die für den Umfang des Rads (R) des Fahrzeugs repräsentativ ist.

4. System nach Anspruch 1 oder 2, wobei die ersten Bestimmungsmittel (DET1) ferner magnetische Mittel umfassen, um eine magnetische Signatur des Rads des Fahrzeugs zu erstellen.

5. System nach Anspruch 4, wobei die magnetischen Mittel mindestens einen Magneten (AIM) umfassen, der mit Befestigungsmitteln ausgestattet ist, die ausgebildet sind, um auf dem Rad (R) des Fahrzeugs in der Nähe der Felge befestigt zu sein.

6. System nach einem der Ansprüche 3 bis 5, wobei die ersten Bestimmungsmittel (DET1) der Geschwindigkeit des Fahrzeugs Lern- und/oder Erkennungsmittel (ARSMR) der magnetischen Signatur des Rads (R) des Fahrzeugs umfassen.

7. System nach Anspruch 5 oder 6, wobei die ersten Bestimmungsmittel (DET1) der Geschwindigkeit des Fahrzeugs Detektionsmittel von Spitzen (DP) der Signale der Messachsen des Magnetometers (M) auf der Basis von Feststellungen lokaler Extremwerte der Messsignale und einer Amplitude (SA) umfassen.

8. System nach einem der vorangehenden Ansprüche, wobei die Bereitstellungsmittel von Informationen (FID) in Bezug auf die Verlagerung des Fahrzeugs eine kartografische Vorrichtung umfassen, wobei das System ferner dritte Bestimmungsmittel eines Abfahrtspunkts und eines Ankunftspunkts des Fahrzeugs umfassen.

9. System nach Anspruch 8, wobei die dritten Bestimmungsmittel (DET3) einen Anzeigebildschirm (AFF), gespeicherte geografische Karten und Direktauswahlmittel der Abfahrts- und Ankunftspunkte auf den Karten für den Benutzer umfassen.

10. System nach Anspruch 8, wobei die dritten Bestimmungsmittel (DET3) einen Empfänger von Daten umfassen, die von einem Satellitennavigationssystem geliefert werden, um einen Abfahrtspunkt zu bestimmen.

11. System nach Anspruch 8, wobei die dritten Bestimmungsmittel (DET3) einen Empfänger von Daten umfassen, die von einer festen, in kurzem Abstand sendenden Vorrichtung geliefert werden, um einen Abfahrtspunkt zu bestimmen.

12. System nach einem der vorangehenden Ansprüche, wobei die ersten Bestimmungsmittel (DET1) ferner erste Korrektmmittel (CORR1) der Signale der Messachsen umfassen, die von dem Magnetometer (M) auf der Basis einer Schätzung der magnetischen Störungen aufgrund des Fahrzeugs bereitgestellt werden.

13. System nach einem der vorangehenden Ansprüche, wobei die zweiten Bestimmungsmittel (DET2) einen triaxialen Beschleunigungsmesser (A) umfassen.

14. System nach einem der vorangehenden Ansprüche in Abhängigkeit von Anspruch 2, wobei die zweiten Bestimmungsmittel (DET2), die den Beschleunigungsmesser (A) umfassen, ferner zweite Korrekturmittel (CORR2) der Signale der Messachsen umfassen, die von dem Beschleunigungsmesser (A) auf der Basis einer Schätzung der Eigenbeschleunigung des Fahrzeugs bereitgestellt werden.

15. System nach einem der vorangehenden Ansprüche, das ferner eine externe Vorrichtung zur Befestigung (FIX) des Systems auf dem Fahrzeug in der Nähe des Rads (R) umfasst.

16. Tragbares Telefon (TP), das ein integriertes System nach einem der vorangehenden Ansprüche umfasst.

17. Verfahren zur Fahrerunterstützung eines Fahrzeugs mit biomechanischem Antrieb, umfassend mindestens ein Rad, wobei das Verfahren die folgenden Schritte umfasst:

- Empfangen von Messwerten eines Magnetometers (M) mit mindestens zwei Messachsen,
- Bestimmen der Geschwindigkeit des Fahrzeugs auf der Basis von von dem Magnetometer (M) bereitgestellten Messwerten,
- Bestimmen des Kurses des Fahrzeugs,
- Bestimmen der Neigung der Rollfläche,
- Bereitstellen von Informationen in Bezug auf eine Verlagerung des Fahrzeugs auf der Basis der Geschwindigkeit des Fahrzeugs, der Neigung der Rollfläche und des Kurses des Fahrzeugs,

**dadurch gekennzeichnet, dass** die Bestimmung des Kurses des Fahrzeugs auf der Basis von von dem Magnetometer (M) bereitgestellten Messwerten erfolgt.

18. Rechnerprogramm, **dadurch gekennzeichnet, dass** es das Verfahren nach Anspruch 17 umsetzt.

19. Set, umfassend ein Rechnerprogramm nach Anspruch 18, mindestens einen Magneten (AIM), der mit Befestigungsmitteln ausgestattet ist, die ausgebildet sind, um auf einem Rad (R) eines Fahrzeugs in der Nähe der Felge befestigt zu sein, und eine externe Vorrichtung zur Befestigung (FIX) des Systems auf dem Fahrzeug in der Nähe des Rads (R).

**Claims**

1. A system for assisting the driver of a vehicle comprising a biomechanical drive comprising at least one wheel (R), the system comprising:

   - a magnetometer (M) with at least two measurement axes;
   - first means for determining (DET1) the speed of the vehicle based on measurements supplied by said magnetometer (M);
   - second means for determining (DET2) the heading of the vehicle and the slope of the rolling surface;
   - means for supplying information (FID) relating to a movement of the vehicle based on the speed of the vehicle, the slope of the rolling surface, and the heading of the vehicle;

   **characterised in that** said second determination means (DET2) determine the heading of the vehicle based on measurements supplied by said magnetometer (M).

2. The system according to Claim 1, in which said second determination means (DET2) further comprise a triaxial accelerometer (A) and/or a gyroscope, and are adapted to determine the heading of the vehicle and the slope of the rolling surface furthermore based on measurements supplied by the triaxial accelerometer and/or the gyroscope, respectively.

3. The system according to Claim 1 or 2, in which said wheel (R) of the vehicle is provided with a magnetic signature representative of the perimeter of said wheel (R) of the vehicle.

4. The system according to Claim 1 or 2, in which said first determining means (DET1) further comprise magnetic means for creating a magnetic signature of said wheel of the vehicle.

5. The system according to Claim 4, in which said magnetic means comprise at least one magnet (AIM) provided with fastening means adapted to be fastened to said wheel (R) of the vehicle, close to the rim.

6. The system according to any of Claims 3 to 5, in which said first means for determining (DET1) the speed of the vehicle comprise means (ARSMR) for learning and/or for recognising the magnetic signature of said wheel (R) of the vehicle.

7. The system according to Claim 5 or 6, in which said first means for determining (DET1) the speed of the vehicle comprise means for detecting spikes (DP) on the signals of measurement axes of said magnetometer (M), based on detections of local extrema of said measurement signals and of an amplitude (SA).

8. The system according to any of the preceding claims, in which said means for supplying information (FID) relating to the movement of the vehicle comprise a cartographic device, said system further comprising third means for determining (DET3) a point of departure and a point of arrival of the vehicle.

9. The system according to Claim 8, in which said third determination means (DET3) comprise a screen (AFF), stored geographic maps, and means for the user to directly select points of departure and of arrival on said maps.

10. The system according to Claim 8, wherein said third determination means (DET3) comprise a receiver of data delivered by a satellite navigation system to determine a point of departure.

11. The system according to Claim 8, in which said third determination means (DET3) comprise a receiver of data delivered by a fixed device with short-distance transmission for determining a point of departure.

12. The system according to any of the preceding claims, in which said first determination means (DET1) further comprise first means for correcting (CORR1) signals from measurement axes supplied by said magnetometer (M) based on an estimation of the magnetic disturbances due to the vehicle.

13. The system according to any of the preceding claims, in which said second determination means (DET2) comprise a triaxial accelerometer (A).

14. The system according to any of the preceding claims dependent upon Claim 2, in which said second determination means (DET2) comprise said accelerometer (A), further comprise second means for correcting (CORR2) the signals from the measurement axes supplied by said accelerometer (A) based on an estimation of the specific acceleration of the vehicle.

15. The system according to any of the preceding claims, further comprising an external device for fastening (FIX) said system onto the vehicle close to said wheel (R).

16. A mobile telephone (TP) comprising an integrated system according to any of the preceding claims.

17. A method for assisting the driver of a biomechanically driven vehicle comprising at least one wheel, the method comprising the steps consisting of:

   - receiving the measurements from a magnetometer (M) with at least two measurement axes;
   - determining the speed of the vehicle based on measurements supplied by said magnetometer (M);
   - determining the heading of the vehicle;
   - determining the slope of the rolling surface;
   - supplying information relating to a movement of the vehicle, based on the speed of the vehicle, the slope of the rolling surface, and the heading of the vehicle;

   **characterised in that** the heading of the vehicle is determined based on measurements supplied by said magnetometer (M).

18. A computer programme, **characterised in that** it implements the method according to Claim 17.

**19.** A kit comprising a computer programme according to Claim 18, at least one magnet (AIM) provided with fastening means adapted to be fastened to a wheel (R) of a vehicle close to the rim, and an external device for fastening (FIX) said system onto the vehicle close to said wheel (R).

FIG.1

FIG.2

FIG.3

FIG.4a

FIG.4b

FIG.4c

FIG.4d

FIG.4e

FIG.4f

Etape 1 — Récupération des données
du magnétomètre M
à l'instant $T_i$ : $B_Z(T_i)$

Etape 2

$B_Z(T_i) - B_Z(T_{i-1}) > 0$

NON

OUI

Etape 4

NON

$B_Z(T_i) - B_Z(T_{i-1}) < 0$

OUI

Etape 3

$B_Z(T_{i-1}) - B_Z(T_{i-2}) < 0$

NON

OUI

Etape 5

NON

$B_Z(T_{i-1}) - B_Z(T_{i-2}) > 0$

OUI

Etape 7

Minimum local de
$B_Z$ à $T_{i-1}$

Etape 6

Maximum local de
$B_Z$ à $T_{i-1}$

Etape 8

Mémorisation dans matrice MAT
mémorisant les 3 derniers extrema locaux

MAT $\left( EL_a (M_a, T_a) ; EL_b(M_b, T_b) ; EL_c(M_c, T_c) \right)$

Etape 9

FIG.5b
A chaque nouvel extremum local
détecté à partir de 3 détectés
(détection de pic)

FIG.5a

FIG.5a

Etape 10

$(M_b - M_a) > SA$
et
$(M_b - M_c) > SA$

Etape 11

Pic détecté $EL_b(M_b, T_b)$
la roue R a fait un tour
supplémentaire

FIG.5b

Pics

⊛ Maximum local
⊘ Minimum local

SA

FIG.6

FIG.7

FIG.8

## RÉFÉRENCES CITÉES DANS LA DESCRIPTION

**Documents brevets cités dans la description**

- FR 0513269
- US 20090063049 A1

**Littérature non-brevet citée dans la description**

- Quaternions and Rotations Sequences